## Europäisches Patentamt
## European Patent Office
## Office européen des brevets

(19)

(11) Numéro de publication: **0 220 995**
A1

(12) # DEMANDE DE BREVET EUROPEEN

(21) Numéro de dépôt: 86420208.0

(22) Date de dépôt: 04.08.86

(51) Int. Cl.⁴: **B 26 B 15/00**, A 01 G 3/03

(30) Priorité: 02.08.85 FR 8512128

(71) Demandeur: **Germain, Pierre, Les Verdelieres, F-69380 Charnay (FR)**

(43) Date de publication de la demande: **06.05.87**
**Bulletin 87/19**

(84) Etats contractants désignés: **AT BE CH DE FR GB IT LI LU NL SE**

(72) Inventeur: **Germain, Pierre, Les Verdelieres, F-69380 Charnay (FR)**

(54) Sécateur autonome motorisé électriquement.

(57) L'invention a pour objet un sécateur motorisé électriquement, caractérisé en ce que la lame fixe ou crochet (2) étant montée sur le corps (1) du sécateur, la lame mobile (4) articulée sur ce corps est soit accrochée à une bielle (18), soit entraînée par un porte lame-came (26) mis en mouvement par des galets rotatifs (28). La bielle est attelée, ou les galets fixés, sur une couronne dentée (14) ou (29), engrenée soit directement par une vis sans fin, soit par l'intermédiaire d'un ou plusieurs étages de réduction. La vis étant entraînée par un moteur électrique (7), le tout réalisant un outil spécifiquement adapté à la taille des végétaux: Vigne, Arbres fruitiers ou autres, Arbustes en pépinières, Plants...

ACTORUM AG

-1-
## SECATEUR MOTORISE ELECTRIQUEMENT ET AUTONOME

TITRE MODIFIÉ
voir page de garde ──────────────────

L'invention a pour objet un sécateur motorisé électriquement et autonome, adapté parfaitement à la taille des végétaux. Le système d'outil coupant motorisé est déjà connu, par exemple : cisaille à tôles, ciseaux pour coupe de tissus, mais toujours pour des produits plats, et alimenté à partir du secteur par une liaison filaire. L'invention, pour s'adapter spécifiquement à la taille des végétaux, tels que la vigne, les arbres fruitiers ou autres, les arbustes en pépinières, les plants ..., utilise différents systèmes mécaniques pour couper des sections circulaires et permettant : une opération de coupe rapide ( fréquence supérieure à 100 mouvements minute ), une grande précision et surtout supprimer toute fatigue musculaire. L'invention réside : dans les moyens utilisés pour actionner les lames à partir d'un moteur électrique, lui-même alimenté par une source autonome, et dans la forme ergonomique qui permet la tenue en main optimale.

Le sécateur ci-décrit, reprend les éléments de coupe traditionnels d'un sécateur manuel, en forme et en dimensionnement, à savoir une lame fixe ou crochet, et une lame coupante mobile. Le crochet est monté fixe sur le corps de l'appareil à l'aide d'un talon assemblé par vis. La lame coupante est montée sur un axe dont elle est rendue solidaire en rotation par un plat. Cet axe tourillonne librement sur le crochet. La lame coupante est également adaptée à la coupe des végétaux, et pour ce faire, selon l'invention, elle reçoit un revêtement de polytetrafluoréthylène, dont les qualités anti-adhérentes facilitent le glissement des fibres végétales contre le biseau de la lame. La lame mobile articulée sur ce

-2-

corps est attelée, selon l'invention, à une bielle elle-même attelée à une couronne dentée engrenant avec une vis sans fin, entraînée en rotation, par un moteur électrique. Par un mouvement de rotation continu du moteur, il est ainsi possible d'obtenir une succession de phases de fermeture et d'ouverture du sécateur, tant que le moteur électrique est sous tension, un interrupteur à commande manuelle étant monté sur le circuit, respectivement pour le fermer et l'ouvrir. A ce premier interrupteur est associé, selon l'invention, un second interrupteur, monté en parallèle avec le premier et dont la fermeture est commandée par l'un des organes mobiles du sécateur pendant une phase comprise entre la fin du mouvement de fermeture et la fin du mouvement d'ouverture du sécateur. En cas d'ouverture du circuit par l'interrupteur à commande manuelle, avant la fin du mouvement de fermeture du sécateur le mouvement se poursuit ainsi automatiquement, jusqu'à ouverture totale du sécateur, et ce, grâce au second interrupteur à commande automatique. Il est cependant possible d'arrêter immédiatement, à volonté, le sécateur avant la fin de sa phase de fermeture. Il suffit, pour cela, d'ouvrir l'interrupteur à commande manuelle qui, pour sa facilité de manoeuvre, se présente avantageusement sous la forme d'une gâchette.

Suivant d'autres caractéristiques de l'invention, ce sécateur est équipé de divers moyens de règlage, à savoir, notamment :- un potentiomètre de règlage de la vitesse de fonctionnement, en vue de modifier la vitesse de taille, et - en combinaison, une possibilité de règler la position de l'axe d'articulation de la bielle sur la couronne dentée, et une possibilité de règler la longueur de cette bielle, en vue de modifier la puissance de coupe du sécateur, en fonction de la nature des végétaux à tailler. Un inverseur peut, en outre, être prévu pour permettre, s'il le faut, de réouvrir le sécateur avant sa fermeture complète.

L'invention sera bien comprise d'ailleurs, et ses avantages ainsi que d'autres caractéristiques, ressortiront de la description qui suit, en référence aux dessins schématiques annexés, représentant, à titre d'exemple non limitatif, une forme d'exécution de ce sécateur à commande électrique.

Figures 1 et 2 en sont des vues de côté avec coupe longitudinale partielle, respectivement en position d'ouverture et en position de fermeture.

Figure 3 est, à plus grande échelle, une vue en coupe suivant III-III de figure 1.

Figure 4 est une vue schématique illustrant le schéma de montage électrique du moteur actionnant le sécateur.

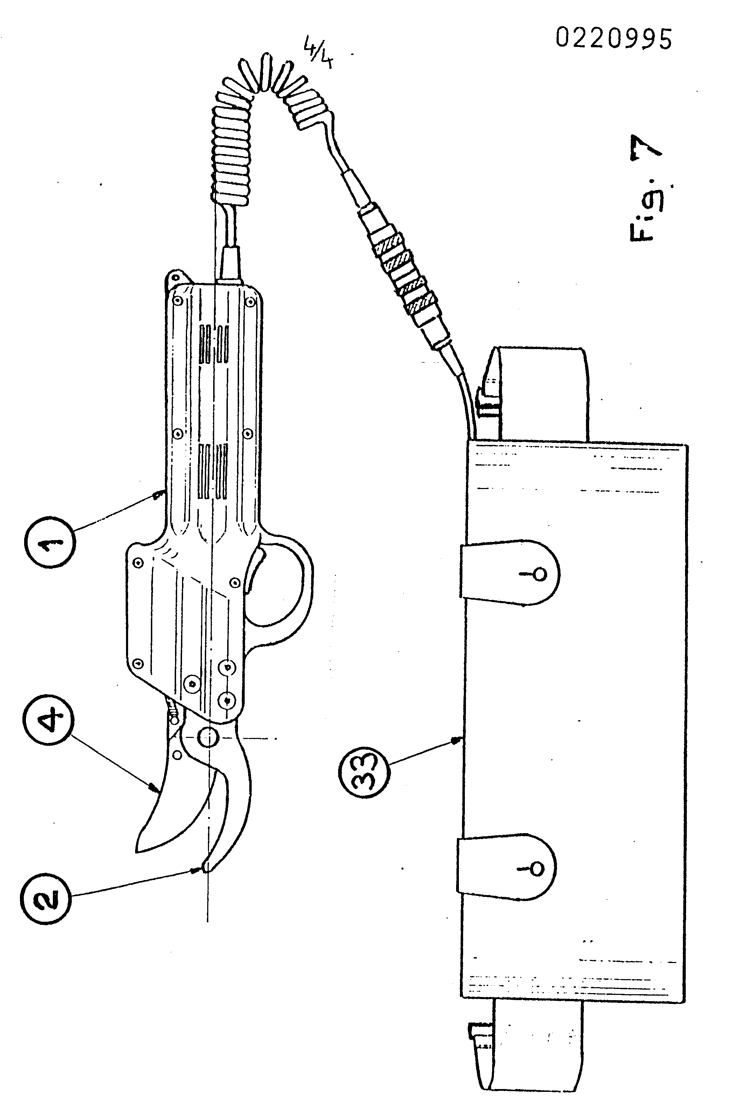

Figures 5,6 et 7, sont une variante du système d'entrainement de la lame coupante.

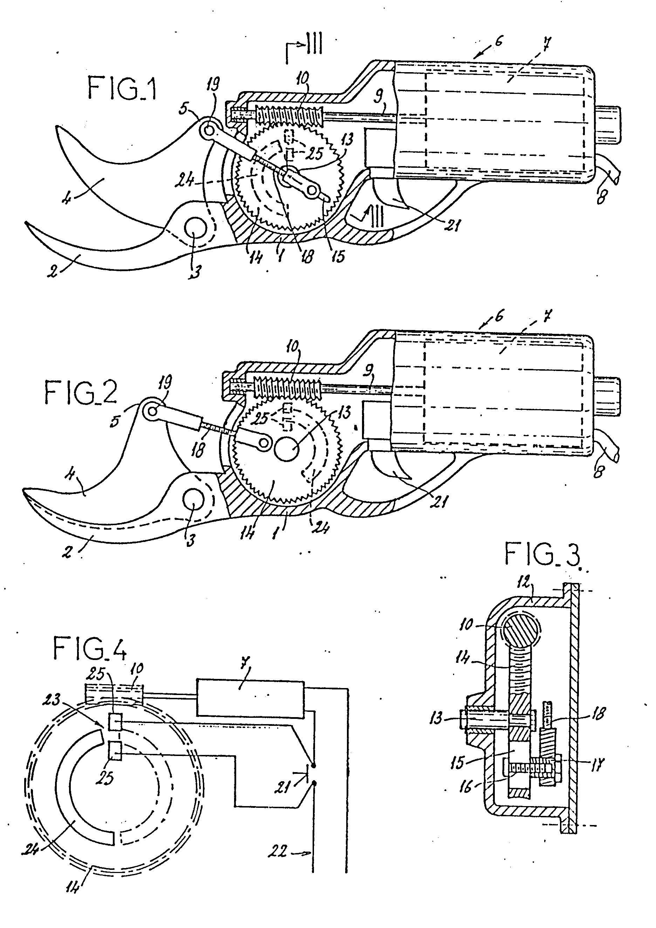

Aux figures 1 et 2, (1) désigne le corps du sécateur sur lequel la lame fixe (2) est montée par des moyens non représentés au dessin. Sur cette lame fixe (2) est articulée autour d'un axe (3), la lame mobile (4) qui comporte une oreille (5). Le corps (1) du sécateur présente une zone aménagée en poignée (6) et à l'intérieur de laquelle est contenu un moteur électrique (7) raccordé par un cordon (8) à une source de courant électrique. Ce moteur (7) est destiné à entraîner, par son arbre (9), une vis sans fin (10) qui se trouve placée à l'intérieur du corps(1). Le corps (1) du sécateur porte, par ailleurs, un boîtier (12) dont la face extérieure porte un palier dans lequel tourillonne l'axe (13) d'une couronne dentée (14) qui est logée dans le boîtier (12) et qui engrène avec la vis sans fin (10). Cette couronne dentée (14)comporte une rainure radiale (15) traversée par la tige d'une vis (16) qui est utilisée à la fixation d'un écrou creux (17)servant d'axe au pied d'une bielle (18) dont la tête est articulée par un axe (19) sur l'oreille(5) de la lame mobile (4) du sécateur. La bielle (18) est télescopique, et des moyens sont prévus pour permettre de l'immobiliser dans la longueur voulue, après que la vis (16) et l'écrou (17) servant d'axe d'articulation à la bielle (18)aient été fixés en un point réglable dans la lumière (15) de la couronne dentée (14). L'utilisation du système de transmission constitué par la vis sans fin (10), la couronne dentée (14) et la bielle (18),

-4-

permet de transformer le mouvement de rotation continu de l'arbre (9) du moteur (7) en un mouvement pendulaire de la lame mobile (4) autour de son axe d'articulation(3). Il en résulte donc bien que, par le moteur électrique (7), il est possible de commander l'ouverture et la fermeture du sécateur. Pour le fonctionnement du sécateur, il est bien entendu prévu un interrupteur à commande manuelle. Cet interrupteur est désigné par (21). Comme le montre la figure 4, il est monté en série sur le circuit électrique (22) d'alimentation du moteur (7).Avec cet interrupteur (21), est monté en parallèle un second interrupteur (23), dont les deux bornes sont suceptibles de coopérer avec un équipage mobile, constitué par un secteur annulaire métallique conducteur (24), fixé concentriquement à l'axe (13) sur l'une des faces de la couronne dentée (14) qui est, par contre, constituée en un matériau électriquement non conducteur. Lorsque, manuellement, l'interrupteur (21) a été mis en position de fermeture, le moteur (7) provoque des mouvements répétitifs de fermeture et d'ouverture du sécateur, et ce, tant que cet interrupteur (21) est maintenu manuellement en position de fermeture; et il est dès lors, à noter que, si l'utilisateur relâche l'interrupteur (21) pendant la phase de fermeture du sécateur, il en résulte automatiquement et immédiatement l'arrêt du sécateur. Il faut, par contre, observer que si l'utilisateur relâche l'interrupteur à commande manuelle (21) après la fin de la phase de fermeture du sécateur, l'arrêt ne sera pas immédiat. Bien au contraire; en effet, le mouvement se poursuit automatiquement jusqu'à ce que la lame mobile (4) atteigne sa position d'ouverture complète. Cela est dû à l'interrupteur (23) qui ferme le circuit électrique (22), grâce au secteur métallique (24), à partir du moment où la couronne dentée (14) atteint une position telle que ce secteur vient en contact avec les deux plots fixes (25) de l'interrupteur (23). L'utilisateur dispose ainsi d'un moyen lui permettant, non seulement d'obtenir que son sécateur demeure en position d'ouverture lorsqu'il n'est pas utilisé, mais aussi de travailler , non pas en continu, mais de façon répétitive avec la certitude que le sécateur revienne automatiquement en position d'ouverture après une opération de taille, ce qui facilite l'opération de taille suivante.

La nature des végétaux à tailler n'étant pas toujours la même, il est intéressant de pouvoir modifier la puissance de coupe du sécateur. Ce but est atteint en modifiant la position du point d'articulation (17) de la bielle (18) sur la couronne dentée (14), en rapprochant ou en écartant ce point par rapport à l'axe (13) de rotation de la couronne (14). Plus l'axe (17) est écarté de l'axe (13), moins la puissance de coupe est grande. Cette modification de la position de l'axe d'articulation de la bielle (18) sur la couronne (14) nécessite évidemment de modifier , en conséquence, la longueur de cette bielle. Cette modification est rendue possible grâce, par exemple, à un agencement télescopique de la bielle.

Selon une variante de réalisation, on peut, reprendre le système de roue et vis sans fin en utilisant éventuellement un 2ème train d'engrenages, ou plus, sachant que ce système de réduction peut aussi être constitué de planétaires et de renvois d'angle. Le plus grand pignon de ces trains portera, selon l'invention, sur une face un certain nombre de galets cylindriques rotatifs servant d'entraineur à une came. La bielle est remplacée par un bras de levier qui sert de porte lame et entraîne, à la fermeture, la lame, la réouverture étant assurée par un ressort de rappel.

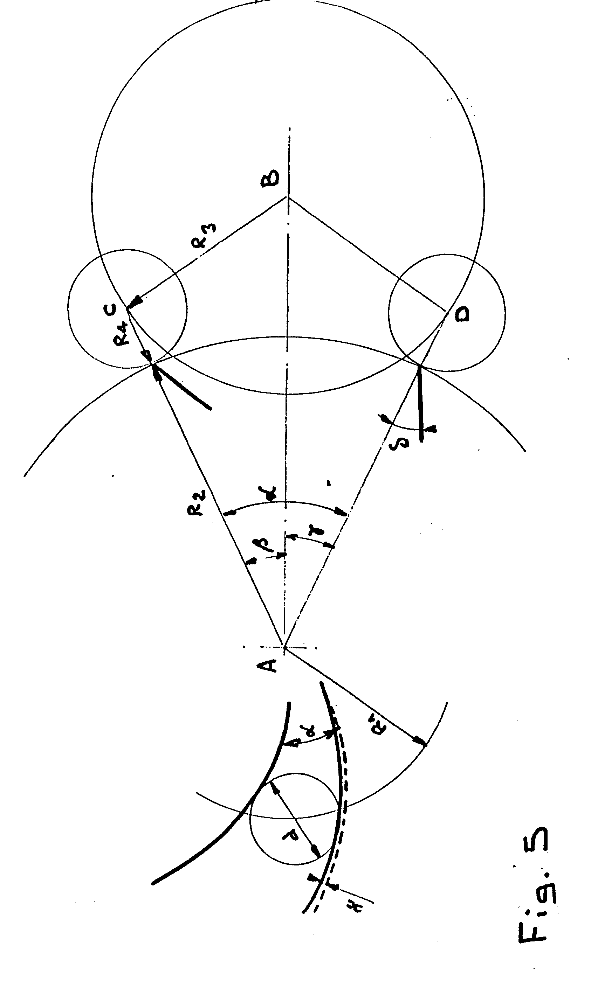

La determination du nombre de galets, résulte, d'une part, de l'épure des sécantes du secteur en rotation de la partie came du porte lame, et du cercle décrit par les galets, d'autre part, de la fréquence maximale d'actions par nombre de tours. Si on explicite, selon la figure 5, on retiendra, que pour couper un rond de Ø d avec des lames dont les formes relèvent de l'art et de l'expérience, à une distance R1 de l'axe A, axe de rotation des lames, nous obtenons une rotation d'un

angle $\alpha$ tel que $\alpha: \dfrac{360\ (d+x)}{R1}$, x étant la valeur de recouvrement des lames à fermeture complète. Cet angle est celui que doit parcourir la partie came du porte lame et soit R2 le rayon de l'extrémité de cette came. Appelons R3 le rayon de giration des galets autour de B matérialisé par l'axe de la roue portant les galets et R4 le rayon de ces galets axés en C ou D. Divisons l'angle $\alpha$ en 2 angles $\beta$ et $\gamma$ de part et d'autre de l'axe A B, l'angle B est égal à $\dfrac{360}{2n}$, n étant le nombre de galets. On a donc

$$\sin \beta = \sin \frac{360}{2n} \cdot \frac{\sin \quad R3}{\sin \ (R2+R4)}$$

Mais, il faut tenir compte que pour avoir une bonne poussée, il est nécessaire que les galets portent sur le plat de la came, et non sur l'extrémité, et que ,d'autre part, il faut le temps de retour de la came pendant la giration des galets, ainsi, il faut introduire une butée limitant l'angle $\gamma$ à une valeur inférieure à $\beta$ de l'ordre de 5°. D'où :

$$\sin \frac{180}{n} = \sin \left(\frac{\alpha+5}{2}\right) \cdot \frac{\sin \ (R2+R4)}{\sin \quad R3}$$

La résolution de cette équation avec des valeurs de R1,R2, R3,R4 dans une géométrie compatible avec un outil tenu à la main, conduit à une valeur de n, entier le plus proche inférieur à la valeur de calcul = 3 (TROIS), valeur retenue pour une efficacité maximale par l'invention, étant précisé que ces galets sont rotatifs et tournent librement sur un axe, ce qui réduit les forces de frottement.

Toujours, selon l'invention, la face d'appui de la came a une orientation bien définie. Cet angle entre la face d'appui et le rayon centré en A et joignant l'extrémité de cette face a été défini par une valeur égale à la somme de l'angle pour une face tangente en C et au complément de l'angle pour une face normale en D. Et dans ce cas, la composante des forces des galets sur la face d'appui, au cours de la rotation, donne une puissance de coupe croissante avec la fermeture des lames.

0220995

-7-

De même, pour une vitesse de rotation uniforme des galets, la vitesse angulaire des lames est décroissante pendant la fermeture. Quand le galet atteint la position C, la came est rappelée à la position D par un ressort qui peut être, selon l'invention, soit un ressort de traction, soit un ressort spiralé.

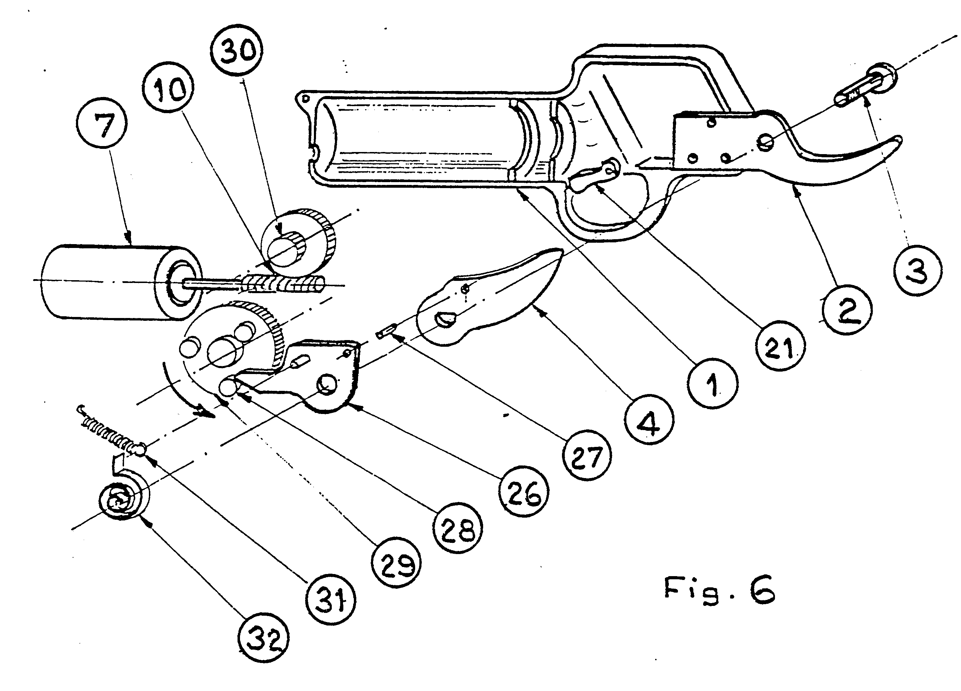

La figure 6 est une vue éclatée de cette variante où (1) désigne toujours le corps sur lequel la lame fixe (2) est montée. La lame coupante (4) est montée sur l'axe (3), elle est entraînée par le porte lame (26) dont elle est rendue solidaire par la goupille (27). Ce porte lame est actionné par les 3 galets (28) portés par la roue (29) mise en rotation par l'engrenage (30). Le 1er étage de la réduction étant assuré à partir du moteur (7) par une roue et vis sans fin (10). La réouverture de la lame est effectuée, soit par un ressort de rappel (31), soit par un ressort spiralé (32).

Le moteur électrique est un moteur à courant continu, alimenté par une batterie (33) portable par l'utilisateur ou intègré à l'outil, ce qui rend, selon l'invention, le sécateur autonome. Pour assurer les autonomies requises et supporter les cycles de charges et périodes de non fonctionnement, l'invention retient l'utilisation de batteries composées d'éléments Cadmium-Nickel. La commande de marche se fait à l'aide d'une gâchette (21) à action de poussoir. Un limiteur de couple électronique est placé en amont du moteur et contrôle l'intensité absorbée. Il coupe l'alimentation du moteur si cette intensité dépasse un seuil réglable et se réarme par action sur la gâchette.

La forme ergonomique de cet outil adapté à la taille des végétaux est réalisée, selon l'invention, par un corps s'inscrivant dans un cylindre, permettant la tenue en main, et une tête de forme quelconque, mais d'un volume nettement plus important que le corps, assurant

0220995

-8-

ainsi, une face d'appui pour la main, permettant, selon l'invention, de mieux guider l'outil et surtout de pousser contre les végétaux à couper..

Comme il va de soi, l'invention ne se limite pas à la seule forme d'exécution de ce sécateur à commande électrique qui a été ci-dessus indiquée à titre d'exemple; elle en embrasse, au contraire, toutes les variantes de réalisation.

# REVENDICATIONS

1 - Sécateur motorisé électriquement·, caractérisé en ce que la lame fixe ou crochet (2) étant montée sur le corps (1) du sécateur, la lame mobile (4) articulée sur ce corps est, soit accrochée à une bielle (18), soit entrainée par un porte lame-came (26) mis en mouvement par des galets rotatifs (28). La bielle est attelée,ou les galets fixés, sur une couronne dentée (14) ou (29), engrenée soit, directement par une vis sans fin, soit, par l'intermédiaire de un ou plusieurs étages de réduction. La vis étant entraînée par un moteur électrique (7), le tout réalisant un outil spécifiquement adapté à la taille des végétaux : Vigne, Arbres fruitiers ou autres, Arbustes en pépinières, Plants...

2 - Sécateur motorisé électriquement selon la revendication 1, caractérisé en ce qu'il est autonome, en ce sens que la source d'énergie constituée d'une batterie du type Cadmium-Nickel est, soit portée par l'utilisateur, soit fait partie intégrante de l'outil.

3 - Sécateur motorisé électriquement selon les revendications 1 et 2, caractérisé par une lame fixe (2) dénommée crochet, fixée sur le corps (1) du sécateur et une lame mobile (4) articulée sur ce corps.Cette lame mobile est entraînée par un porte lame (26) dont la face d'appui jouant le rôle de came, a un angle bien défini, selon l'invention.

4 - Sécateur motorisé électriquement selon les revendications 1 à 3 , caractérisé en ce que le porte lame (26) est animé d'un mouvement de va-et-vient généré par 3 galets dont la rotation est assurée par le moteur électrique (7) à travers une réduction à un ou plusieurs étages.

5 - Sécateur motorisé électriquement selon les revendications 1 à 4 , caractérisé en ce que les trois galets d'entraînement sont rotatifs autour d'un

0220995

-10-

axe monté sur un élément en giration.

6 - Sécateur motorisé électriquement selon l'une ou les revendications 1 à 5, caractérisé par sa forme ergonomique constituée d'un corps de section circulaire, ou s'inscrivant dans une forme proche d'un cylindre permettant la tenue en main, et d'une tête de forme quelconque, mais d'un volume plus important que le corps, permettant, ainsi, d'assurer une face d'appui pour la main, dont le but est de mieux guider l'outil et surtout de pousser fermement contre les végétaux à couper.

7 - Sécateur motorisé électriquement selon l'une ou les revendications 1 à 6, caractérisé en ce que la lame mobile est revêtue d'une couche de polytétrafluoréthylène dont les qualités anti-adhérentes facilitent l'adaptation spécifique à la taille des végétaux.

0220995

1/4

FIG_1

FIG_2

FIG_3

FIG_4

Fig. 5

Fig. 6

Fig. 7

0220995

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 787 742 (T.C. MURPHY)<br><br>* Colonne 5, ligne 2 - colonne 6, ligne 6; figures 2,3 * | 1,3,4, 6 | B 26 B 15/00<br>A 01 G 3/03 |
| | --- | | |
| Y | FR-A-2 511 839 (FELCO SA)<br><br>* Figure 3 * | 1,3,4, 6 | |
| | --- | | |
| A | US-A-3 971 130 (W.M. QUERFURTH)<br>* Colonnes 2,3; figure 3 * | 1-5 | |
| | --- | | |
| A | FR-A-1 568 870 (BRISKMAN) | | |
| | --- | | |
| A | FR-A-1 564 551 (BRISKMAN) | | |
| | --- | | |
| A | FR-A-1 124 691 (S.A.G.I.) | | |
| | --- | | |
| A | US-A-1 744 368 (C. DERFLER) | | |
| | --- | | |
| A | GB-A- 750 952 (WARSITZ) | | |
| | ----- | | |

DOMAINES TECHNIQUES RECHERCHES (Int. Cl.4)

B 26 B
A 01 G

Le présent rapport de recherche a été établi pour toutes les revendications

| Lieu de la recherche | Date d'achèvement de la recherche | Examinateur |
|---|---|---|
| LA HAYE | 05-11-1986 | WOHLRAPP R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82